# FASCICULE DE BREVET EUROPEEN

(11) **EP 2 490 616 B1**
(45) Date de publication et mention de la délivrance du brevet: **09.03.2016**
(21) Numéro de dépôt: 10785114.9
(22) Date de dépôt: 14.10.2010
(51) Int. Cl.: A61C 19/02

(54) **DISPOSITIF DE STOCKAGE ET DE DISTRIBUTION DE PIÈCES DESTINÉES À L'ART DENTAIRE**
VORRICHTUNG ZUR LAGERUNG UND AUSGABE VON ZAHNÄRZTLICHEN TEILEN
DEVICE FOR STORING AND DISPENSING DENTISTRY PARTS

(30) Priorité: 23.10.2009 FR 0957469
(43) Date de publication de la demande: 29.08.2012
(73) Titulaire: Apol, 39300 Champagnole (FR)
(72) Inventeur: GAGNEUR, Hervé, F-39800 Besain (FR)
(74) Mandataire: Gasquet, Denis
(86) Numéro de dépôt international: PCT/FR2010/052182
(87) Numéro de publication internationale: WO 2011/048304

(56) Documents cités:
- FR-A- 770 028
- US-A- 1 856 807
- US-A- 4 449 630
- US-A- 5 150 788

## Description

La présente invention concerne un dispositif de stockage et de distribution de pièces destinées à l'art dentaire. Ces pièces pouvant être par exemple des tenons, des forêts ou des alésoirs.

Tout individu ayant des problèmes de dentition, a déjà vu opérer son dentiste lorsque celui-ci doit réaliser des empreintes de dents, qui seront utilisées par le prothésiste afin que celui-ci réalise des dents de substitution s'intégrant parfaitement à sa morphologie dentaire. Pour se faire, dans la reconstitution dentaire, le dentiste après avoir préparé la racine en y faisant un alésage, installe un tenon en l'impactant dans la racine de la dent à reconstituer, et fixe sur la tête de tenon qui fait saillie un support de couronne généralement en résine composite, destiné à être recouvert d'une couronne. Mais rien n'est fait pour faciliter la tâche du praticien qui, dans la plupart des cas cherche dans une boite le tenon qui lui sera nécessaire, lesquels tenons sont généralement disposés en vrac, sans hygiène particulière.

Le document FR770028 divulgue un appareil distributeur d'outils de chirurgie, par exemple dentaire comportant des chargeurs constitués de boîtes de faible épaisseur ouvertes suivant deux de leurs petits côtés et étant reçus dans des fentes radiales d'un support. Un organe distributeur permet de distribuer un outil qui est recueilli par une glissière de distribution fixée sous le support.

La présente invention se veut de résoudre les inconvénients cités précédemment et propose un dispositif de stockage et de distribution, particulièrement pratique.

Ainsi, le dispositif de stockage et de distribution de pièces destinées à l'art dentaire, comme par exemple des tenons, est selon l'invention, défini par la revendication 1.

Selon une caractéristique complémentaire, le support comprend au moins un logement de barillet dont la paroi inférieure d'appui comprend par coopération avec le bouchon inférieur des moyens de verrouillage et de blocage en rotation dudit bouchon inférieur.

Selon une autre caractéristique, la paroi transversale du bouchon inférieur comprend une saillie d'indexation et de blocage en rotation s'étendant vers le bas et deux pattes de verrouillage, la saillie d'indexation étant destinée à être engagée dans un trou d'indexation réalisé dans la paroi inférieure d'appui du support, tandis que les deux pattes de verrouillage sont destinées à être engagées dans un trou de verrouillage correspondant réalisé dans la paroi inférieure d'appui du support.

Ajoutons que le corps du barillet comprend un ensemble de logements de tenons débouchant vers la bas, dont l'un est ouvert latéralement sur une partie de la hauteur pour recevoir une patte sécable, solidaire du bouchon inférieur, tandis que la patte sécable est destinée à être cassée par l'utilisateur avant la mise en place du barillet dans son logement, ladite patte sécable quand elle n'est pas cassée permet d'une part d'empêcher la rotation du corps de barillet sur son bouchon inférieur et d'autre part de boucher l'ouverture inférieure des logements de tenons, tandis que quand la patte sécable est cassée cela permet d'une part de pouvoir faire pivoter le corps de barillet sur son bouchon inférieur et d'autre part de créer le passage de distribution (24) permettant la libération du tenon dont le logement est en regard avec ledit passage de distribution.

Notons que selon une autre caractéristique complémentaire, le corps de barillets est clipsé sur son bouchon inférieur et est monté pivotant par rapport à ce bouchon sur une saillie centrale par coopération de cette saillie centrale avec le trou central du corps de barillet, cette coopération constituant l'axe de pivotement du corps de barillet.

Le corps de barillet et son bouchon inférieur sont avantageusement réalisés en matière plastique.

Notons que le support se présente par exemple sous la forme d'une pièce sensiblement circulaire comprenant un rebord périphérique externe, qui comprend les logements de barillets, tandis que chacun des logements est constitué par un profil en creux ouvert vers l'intérieur du support, ledit logement étant limité vers l'extérieur par une paroi courbe et vers le bas par une paroi inférieure d'appui pour le barillet correspondant, tandis que la largeur de la paroi inférieure d'appui est d'une dimension inférieure au diamètre, afin qu'il n'y ait pas de paroi d'appui au droit du logement de tenon et permettre la libération du tenon choisi, après rotation du barillet pour placer le tenon choisi en regard du passage de distribution.

Au regard de chacun des logements de barillets se trouve une coupelle de réception dont le fond est plus bas que la paroi inférieure d'appui correspondante, tandis que la coupelle de réception se trouve à une distance de la paroi inférieure d'appui, qui est supérieure à la longueur des tenons afin que le tenon choisi, après pivotement du corps de barillet pour placer ce tenon en regard du passage de distribution, puisse tomber par simple gravité pour se placer dans la coupelle correspondante.

Selon une caractéristique complémentaire, le dispositif comprend une coupelle centrale amovible qui vient coiffer la saille centrale du support et dont les retombées latérales comprennent des cuvettes de réception destinées à venir se superposer aux coupelles de réception du support principal, ainsi lorsque la coupelle centrale est en place les tenons choisis ne tombent pas dans les coupelles de réception du support mais dans les cuvettes de réception correspondantes de la coupelle centrale, qui est avantageusement en matériau transparent tel qu'en méthacrylate ou autre, ce qui permet à l'utilisateur de visualiser les pièces du support principal qui ont été libérées.

D'autres caractéristiques et avantages de l'invention se dégageront de la description qui va suivre en regard des dessins annexées qui ne sont donnés qu'à titre d'exemples non limitatifs.

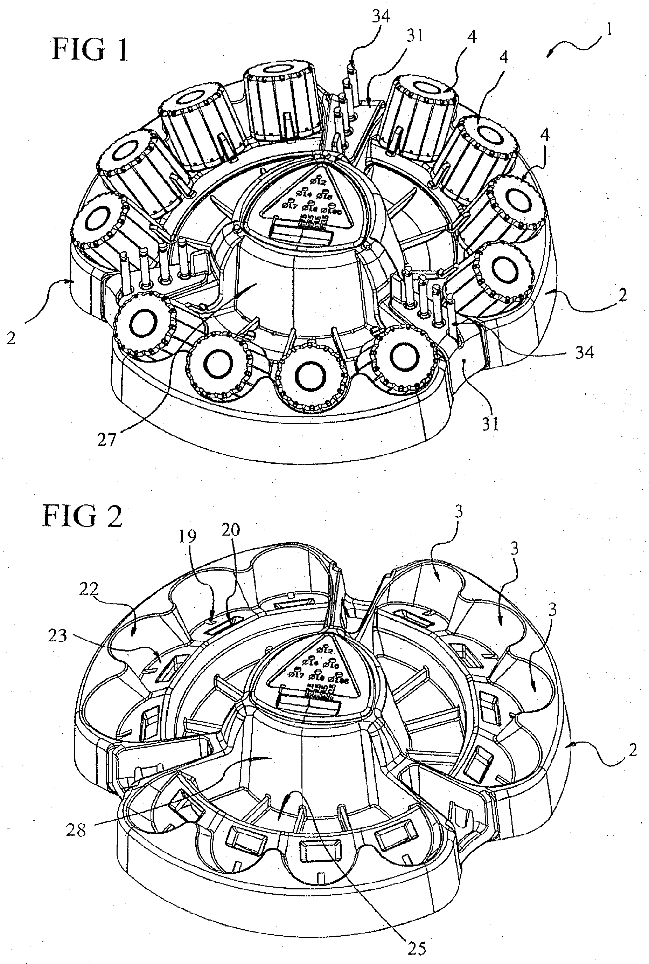

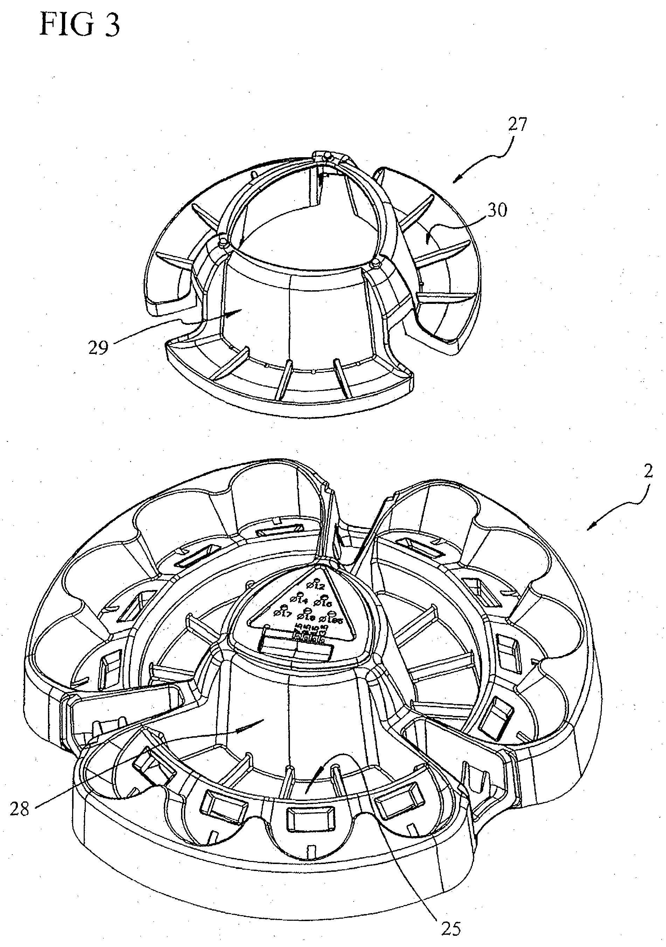

Les figures 1, 2, 3 sont des vues en perspective du support.
La figure 1 est une vue en perspective du support avec les barillets et la coupelle centrale amovible.
La figure 2 est une vue en perspective du support seul sans les barillets et sans la coupelle centrale.
La figure 3 est une vue en perspective du support sans les barillets, avec sa coupelle centrale soulevée.
La figure 4 est une vue de dessus du support.
La figure 5 est une vue partielle en coupe selon A-A
Les figure 6 et 7 sont des vues illustrant un barillet de distribution.

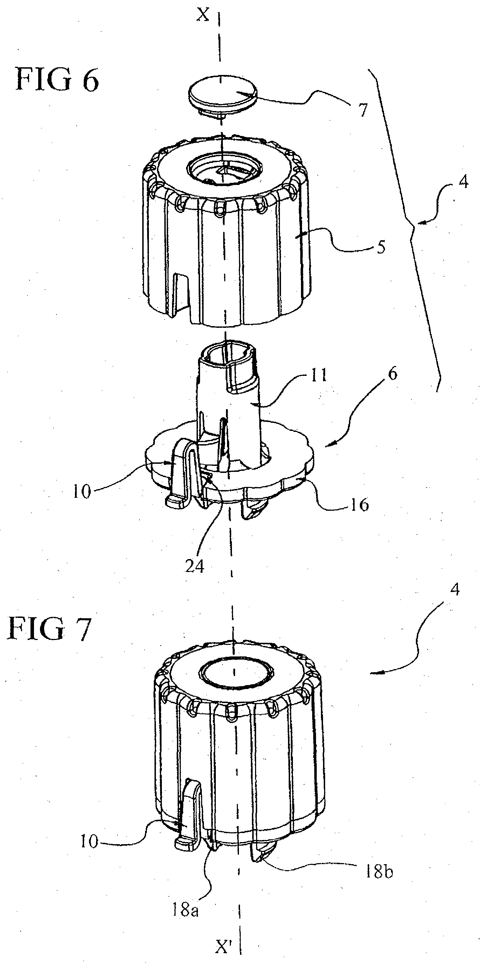

La figure 6 est une vue éclatée du barillet.
La figure 7 est une vue du barillet monté.

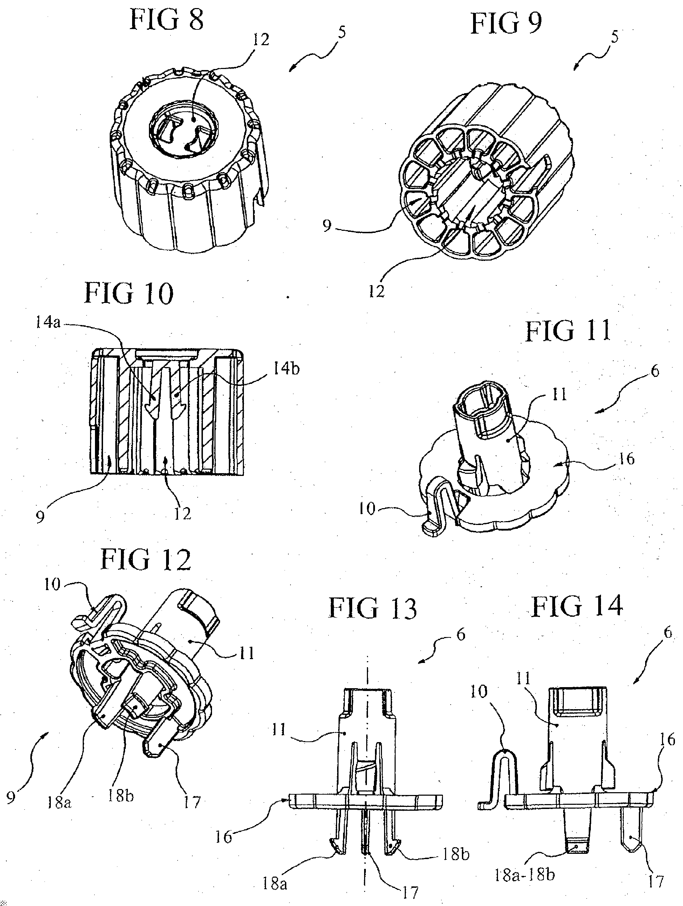

Les figures 8, 9,10 sont des vues du corps de barillet.
La figure 8 est une vue de dessus en perspective.
La figure 9 est une vue de dessous en perspective.
La figure 10 est une vue en coupe transversale
Les figures 11, 12, 13, 14, sont des vues du bouchon inférieur du barillet.
La figure 11 est une vue de dessus en perspective.
La figure 12 est une vue de dessous en perspective.
La figure 13 est une vue latérale selon F1.
La figure 14 est une vue latérale selon F2.

Le dispositif de l'invention portant la référence générale (1) est constitué d'un support principal (2) comprenant plusieurs logements de barillet (3) destinés à recevoir des barillets de distribution (4).

Selon l'exemple donné à titre d'exemple, le dispositif comprend une pluralité de logements de barillet (3), mais on ne sortirait pas du cadre de l'invention si le dispositif ne comprenait qu'un seul logement de barillet. Dans l'exemple de réalisation donné à titre d'exemple pour illustrer l'invention le support comprend trois groupes de quatre logements soit douze logements.

On notera que chacun des barillets est constitué, d'un corps de barillet (5), qui est avantageusement de forme cylindrique d'axe X, X', qui est bouché à sa partie inférieure par un bouchon inférieur (6), tandis que la partie supérieure comprend un bouchon supérieur (7).

Chacun des barillets est destiné à recevoir et contenir, pour les stocker au moins provisoirement avant leur utilisation plusieurs tenons (8). Ainsi le corps du barillet (5) comprend un ensemble de logements de tenons (9) qui sont débouchant vers le bas. Dans le mode de réalisation donné à titre d'exemple, le barillet comprend douze logements dont l'un est ouvert latéralement sur une partie de la hauteur pour recevoir une patte sécable (10), solidaire du bouchon inférieur (6).

Ajoutons que le corps de barillet est monté pivotant sur son bouchon inférieur (6) autour d'un axe X, X', comprenant à cet effet une saillie centrale (11) engagée dans un trou central (12) du corps de barillet (5) le dit trou central (12) du corps de barillet comprenant deux pattes de verrouillage (14a, 14b) s'étendant vers le bas. Le corps de barillet est réalisé en matière plastique et de ce fait les deux pattes de verrouillage (14a, 14b) sont élastiques pour être engagées dans un trou central (33) réalisé dans la saillie centrale du bouchon inférieur. Par ailleurs, la paroi transversale (16) du bouchon inférieur (6) comprend la patte sécable (10), dont on expliquera l'utilisation plus loin dans la description. Dé plus la paroi transversale (16) du bouchon inférieur (6) comprend une saillie d'indexation et de blocage en rotation (17) s'étendant vers le bas et deux pattes de verrouillage (18as 18b).

La saillie d'indexation (17) est destinée à être engagée dans un trou d'indexation (19) réalisé dans le logement de barillet, et plus particulièrement dans sa paroi d'appui (23). Notons que le bouchon inférieur est lui aussi réalisé en matière plastique et de ce fait les deux pattes de verrouillage (18a, 18b) sont déformables élastiquement pour être engagées dans un trou de verrouillage (20) correspondant réalisé dans le logement de barillet (3) du support (2)et plus particulièrement dans sa paroi inférieure d'appui (23).

On a compris que dans le corps de barillet (5) est clipsé sur son bouchon inférieur (6) et est monté pivotant par rapport à ce bouchon sur la saillie centrale (11) par coopération de cette saillie centrale (11) avec le trou central (12) du corps de barillet. Cette coopération constituant l'axe de pivotement X-X' du corps de barillet. Rappelons qu'en position montée le bouchon inférieur (6) est bloqué en pivotement dans le logement de barillet grâce à la coopération de la saillie d'indexation (17) avec le trou d'indexation (19). Ledit bouchon inférieur étant verrouillé dans le logement grâce aux deux pattes de verrouillage (14a, 14b) engagées dans les trous de verrouillage (18a, 18b) du support.

Notons que la patte sécable est destinée à être cassée par l'utilisateur avant la mise en place du barillet dans son logement. Ladite patte sécable quand elle n'est pas cassée permet d'une part d'empêcher la rotation du corps de barillet sur son bouchon inférieur et d'autre part de boucher l'ouverture inférieure des logements de tenons. Quand la patte sécable est cassée cela permet d'une part de pouvoir faire pivoter le corps de barillet sur son bouchon inférieur et d'autre part de créer un passage de distribution (24) permettant la libération du tenon dont le logement est en regard avec ledit passage de distribution.

Comme nous l'avons précisé précédemment, le dispositif de l'invention (1) est constitué d'un support principal (2) comprenant plusieurs logements de barillet (3) destinés à recevoir des barillets de distribution (4). A cet effet le support se présente par exemple sous la forme d'une pièce sensiblement circulaire comprenant un rebord périphérique externe (21), qui comprend les logements de barillets (3). Chacun des logements est constitué par un profil en creux ouvert vers l'intérieur du support (2), ledit logement étant limité vers l'extérieur par une paroi courbe (22) et vers le bas par une paroi inférieure d'appui (23) pour le barillet correspondant. On notera la largeur (L) de la paroi inférieure d'appui est d'une dimension inférieure au diamètre (D), afin qu'il n'y ait pas de paroi d'appui au droit du logement de tenon et permettre la libération du tenon choisi, après rotation du barillet pour placer le tenon choisi en regard du passage de distribution.

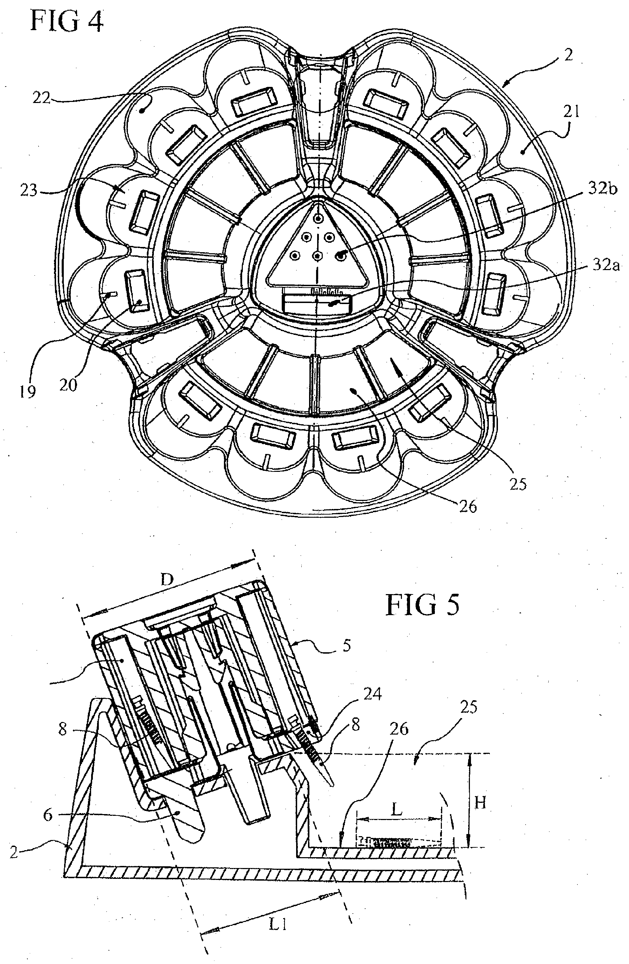

On notera qu'au regard de chacun des logements de barillets se trouve une coupelle de réception (25) dont le fond (26) est plus bas que la paroi inférieure d'appui correspondante (23). Elle se trouve plus particulièrement à une distance (H) qui est supérieure à la longueur (L) des tenons afin que le tenon choisi, après pivotement du corps de barillet pour placer ce tenon en regard du passage de distribution, puisse tomber par simple gravité pour se placer dans la coupelle correspondante tel que cela apparaît à la figure 5.

Par ailleurs le dispositif comprend une coupelle centrale (27) amovible qui vient coiffer la saille centrale (28) du support et dont les retombées latérales (29) comprennent des cuvettes de réception (30) destinées à venir se superposer aux coupelles de réception (25) du support principal (2). Ainsi lorsque la coupelle centrale (27) est en place les tenons choisis ne tombent pas dans les coupelles de réception (25) du support (2) mais dans les cuvettes de réception correspondantes (30) de la coupelle centrale (27). De façon avantageuse la coupelle centrale est en matériau transparent tel qu'en méthacrylate ou autre, ce qui permet à l'utilisateur de visualiser les pièces du support principal qui ont été libérées.

On notera que le support (2) comprend plusieurs modules amovibles (31) destinés au rangement des alésoirs (34).

Notons aussi que la partie supérieure de la saillie centrale du support (28) comprend des jauges de mesure (32a, 32b) pour identifier les tenons en longueur (32a) et en diamètre (32b).

On a compris que le dispositif est un carrousel universel et autoclavable permettant le stockage et la distribution de tenons. Il offre une ergonomie, et une souplesse d'utilisation jamais proposée. Il forme sur 4 niveaux : un support de réception des conditionnements (les barillets), des modules intégrés mais mobile de rangement d'alésoirs, des coupelles de réception des pièces choisies et de manipulation, un second niveau de rangement pour intégrer soit des tenons au retour du labo après stérilisation ou encore un niveau de rangement pour les calcinables ou autre tenons, et des jauges de mesure pour identifier les tenons en longueur et en diamètre.

Ajoutons que tous les éléments du dispositif sont stérilisables et les barillets de conditionnement qui sont aussi stérilisables permettent de stocker et distribuer plusieurs tenons, comme par exemple 11 tenons tel qu'illustré et ces barillets permettent de sélectionner un à un les tenons choisis. L'opérateur pourra stériliser le barillet à la livraison mais également le recharger de pièces déjà utilisées et le stériliser à nouveau. Notons que grâce au dispositif les tenons ne se touchent pas, ce qui représente un facteur déterminent pour valider l'étape de stérilisation.

On a aussi compris à la lecture de la présente description que le dispositif permet à l'utilisateur de composer et de personnaliser son coffret, selon le type de tenons, le diamètre, la longueur, et que le conditionnement en barillet permet de sélectionner à l'unité le tenon choisi; de plus il est directement clipsable sur le support sans manipulation hasardeuse.

On notera aussi que la coupelle transparente permet de recevoir et de prélever les tenons un par un ce qui élimine les risques de contamination de l'ensemble du réservoir. Le niveau inférieur du support permettant de différencier les tenons déjà utilisés et stérilisés, ce niveau permettant par exemple de destinés ces tenons pour les provisoires.

Notons aussi que la face supérieure du barillet permet un marquage, identifiant son contenu, à savoir et par exemple un code de couleur et un marquage identifiant le type des tenons stockés, leur longueur et leur diamètre.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de stockage et de distribution (1) de pièces destinées à l'art dentaire, constitué d'au moins un barillet (4) dont le corps (5) comprend une pluralité de logements ouverts vers le bas, dans sa position d'utilisation, destinés à recevoir les dites pièces, ledit corps de barillet (5) étant monté pivotant sur un bouchon inférieur (6) fixé sur un support (2) dans un logement de barillet, ledit bouchon comprenant un passage de distribution (24) permettant aux pièces choisies par l'utilisateur après rotation du corps de barillet, de tomber par gravité dans une coupelle de réception (25, 26), et le support (2) se présentant sous la forme d'une pièce sensiblement circulaire comprenant un rebord périphérique externe (21), qui comprend des logements de barillets (3).

2. Dispositif de stockage et de distribution (1) selon la revendication 1, **caractérisé en ce que** lesdits logements de barillet (3) ont une paroi inférieure d'appui (23) comprenant par coopération avec le bouchon inférieur (6) des moyens de verrouillage et de blocage en rotation dudit bouchon inférieur.

3. Dispositif de stockage et de distribution (1) selon la revendication 2, **caractérisé en ce que** la paroi transversale (16) du bouchon inférieur (6) comprend une saillie d'indexation et de blocage en rotation (17) s'étendant vers le bas et deux pattes de verrouillage (18a, 18b), la saillie d'indexation (17) étant destinée à être engagée dans un trou d'indexation (19) réalisé dans la paroi inférieure d'appui (23) du support (2), tandis que les deux pattes de verrouillage (18a, 18b) sont destinées à être engagées dans un trou de verrouillage (20) correspondant réalisé dans la paroi inférieure d'appui (23) du support (2).

4. Dispositif de stockage et de distribution (1) selon la revendication 3, **caractérisé en ce que** le corps du barillet (5) qui comprend un ensemble de logements de tenons (9) débouchant vers la bas, dont l'un est ouvert latéralement sur une partie de la hauteur pour recevoir une patte sécable (10), solidaire du bouchon inférieur (6), tandis que la patte sécable est destinée à être cassée par l'utilisateur avant la mise en place du barillet dans son logement, ladite patte sécable quand elle n'est pas cassée permet d'une part d'empêcher la rotation du corps de barillet sur son bouchon inférieur et d'autre part de boucher l'ouverture inférieure des logements de tenons, tandis que quand la patte sécable est cassée cela permet d'une part de pouvoir faire pivoter le corps de barillet sur son bouchon inférieur et d'autre part de créer le passage de distribution (24) permettant la libération du tenon dont le logement est en regard avec ledit passage de distribution.

5. Dispositif de stockage et de distribution (1) selon la revendication 4, **caractérisé en ce que** le corps de barillets (5) est clipsé sur son bouchon inférieur (6) et est monté pivotant par rapport à ce bouchon sur une saillie centrale (11) par coopération de cette saillie centrale (11) avec le trou central (12) du corps de barillet, cette coopération constituant l'axe de pivotement (X-X') du corps de barillet.

6. Dispositif de stockage et de distribution (1) selon l'une quelconque des revendications précédentes, **caractérisé en ce que** le corps de barillet (5) et son bouchon inférieur (6) sont réalisés en matière plastique.

7. Dispositif de stockage et de distribution (1) selon la revendication 1, **caractérisé en ce que** lesdites pièces sont des tenons dentaires (8) et **en ce que** chacun des logements est constitué par un profil en creux ouvert vers l'intérieur du support (2), ledit logement étant limité vers l'extérieur par une paroi courbe (22) et vers le bas par une paroi inférieure d'appui (23) pour le barillet correspondant, tandis que la largeur (L) de la paroi inférieure d'appui est d'une dimension inférieure au diamètre (D), afin qu'il n'y ait pas de paroi d'appui au droit du logement de tenon et permettre la libération du tenon choisi, après rotation du barillet pour placer le tenon choisi en regard du passage de distribution.

8. Dispositif de stockage et de distribution (1) selon la revendication précédente, **caractérisé en ce qu'**au regard de chacun des logements de barillets se trouve une coupelle de réception (25) dont le fond (26) est plus bas que la paroi inférieure d'appui correspondante (23).

9. Dispositif de stockage et de distribution (1) selon la revendication précédente, **caractérisé en ce que** la coupelle de réception se trouve à une distance (H) de la paroi inférieure d'appui, qui est supérieure à la longueur (L) des tenons afin que le tenon choisi, après pivotement du corps de barillet pour placer ce tenon en regard du passage de distribution, puisse tomber par simple gravité pour se placer dans la coupelle correspondante.

10. Dispositif de stockage et de distribution (1) selon l'une quelconque des revendications précédentes, **caractérisé en ce que** le dispositif comprend une coupelle centrale (27) amovible qui vient coiffer la saille centrale (28) du support (2) et dont les retombées latérales (29) comprennent des cuvettes de réception (30) destinées à venir se superposer aux coupelles de réception (25) du support principal (2), ainsi lorsque la coupelle centrale (27) est en place les tenons choisis ne tombent pas dans les coupelles de réception (25) du support (2) mais dans les cuvettes de réception correspondantes (30) de la coupelle centrale (27).

11. Dispositif de stockage et de distribution (1) selon la revendication précédente, **caractérisé en ce que** la coupelle centrale est en matériau transparent tel qu'en méthacrylate ou autre, ce qui permet à l'utilisateur de visualiser les pièces du support principal qui ont été libérées.

12. Dispositif de stockage et de distribution (1) selon l'une quelconque des revendications précédentes, **caractérisé en ce que** le support (2) comprend plusieurs modules amovibles (31) destinés au rangement des alésoirs (34).

13. Dispositif de stockage et de distribution (1) selon l'une quelconque des revendications précédentes, **caractérisé en ce que** la partie supérieure de la saillie centrale du support (28) comprend des jauges de mesure (32a, 32b) pour identifier les tenons en longueur (32a) et en diamètre (32b).

14. Dispositif de stockage et de distribution (1) selon l'une quelconque des revendications précédentes, **caractérisé en ce que** les pièces mises en place dans les logements (3) des barillets sont des tenons dentaires (8).

## Patentansprüche

1. Vorrichtung zur Lagerung und Ausgabe (1) von zahnärztlichen Teilen, die aus mindestens einer Trommel (4) besteht, deren Körper (5) eine Vielzahl von Lagern aufweist, die in ihrer Gebrauchsstellung nach unten offen sind, die dazu bestimmt sind, die Teile aufzunehmen, wobei der Körper der Trommel (5) schwenkbar auf einem unteren Stopfen (6) montiert ist, der auf einem Halter (2) in einem Trommellager befestigt ist, wobei der Stopfen einen Ausgabedurchgang (24) umfasst, der es ermöglicht, die von dem Nutzer ausgewählten Teile nach dem Drehen des Trommelkörpers mittels Schwerkraft in eine Aufnahmeschale (25, 26) fallen zu lassen, und wobei der Halter (2) die Form eines im Wesentlichen kreisförmigen Teils hat, das einen äußeren umlaufenden Rand (21) aufweist, der Trommellager (3) aufweist.

2. Vorrichtung zur Lagerung und Ausgabe (1) nach Anspruch 1, **dadurch gekennzeichnet, dass** die Trommellager (3) eine untere Stützwand (23) haben, die durch Zusammenwirken mit dem unteren Stopfen (6) Mittel zum Verschließen und zum Dreharretieren des unteren Stopfens aufweist.

3. Vorrichtung zur Lagerung und Abgabe (1) nach Anspruch 2, **dadurch gekennzeichnet, dass** die Querwand (16) des unteren Stopfens (6) einen Vorsprung zum Rasten und Dreharretieren (17) aufweist, der sich nach unten erstreckt und zwei Verschlusslaschen (18a, 18b), wobei der Vorsprung zum Rasten (17) dazu bestimmt ist, in ein Rastloch (19) einzugreifen, das in der unteren Stützwand (23) des Halters (2) ausgebildet ist, während die beiden Verschlusslaschen (18a, 18b) dazu bestimmt sind, in ein entsprechendes Verschlussloch (20) einzugreifen, das in der unteren Stützwand (23) des Halters (2) ausgebildet ist.

4. Vorrichtung zur Lagerung und Ausgabe (1) nach Anspruch 3, **dadurch gekennzeichnet, dass** der Trommelkörper (5), der eine Gruppe von Stiftlagern (9) aufweist, die nach unten einmünden, von denen eines auf einem Teil der Höhe seitlich geöffnet ist, um eine teilbare Lasche (10) aufzunehmen, die mit dem unteren Stopfen (6) fest verbunden ist, während die teilbare Lasche dazu bestimmt ist, von dem Nutzer vor der Anordnung der Trommel in ihrem Lager zerbrochen zu werden, wobei es die teilbare Lasche, wenn sie nicht zerbrochen ist, einerseits ermöglicht, die Drehung des Trommelkörpers auf seinem unteren Stopfen zu verhindern und andererseits die untere Öffnung der Stiftlager zu versperren, während, wenn die teilbare Lasche zerbrochen ist, dies einerseits ermöglicht, den Trommelkörper auf seinem unteren Stopfen schwenken zu können und andererseits den Ausgabedurchgang (24) zu erzeugen, der die Freigabe des Stifts ermöglicht, dessen Lager gegenüber dem Ausgabedurchgang liegt.

5. Vorrichtung zur Lagerung und Ausgabe (1) nach Anspruch 4, **dadurch gekennzeichnet, dass** der Trommelkörper (5) auf seinen unteren Stopfen (6) geklickt ist und in Bezug auf diesen Stopfen auf einen mittleren Vorsprung (11) durch Zusammenwirken dieses mittleren Vorsprungs (11) mit dem mittleren Loch (12) des Trommelkörpers schwenkbar montiert ist, wobei dieses Zusammenwirken die Schenkachse (X-X') des Trommelkörpers darstellt.

6. Vorrichtung zur Lagerung und Ausgabe (1) nach einem der vorhergehenden Ansprüche, **dadurch gekennzeichnet, dass** der Trommelkörper (5) und sein unterer Stopfen (6) aus Kunststoffmaterial ausgebildet sind.

7. Vorrichtung zur Lagerung und Ausgabe (1) nach Anspruch 1, **dadurch gekennzeichnet, dass** die Teile Dentalstifte (8) sind, und dadurch, dass jedes der Lager aus einem Hohlprofil besteht, das ins Innere des Halters (2) geöffnet ist, wobei das Lager nach außen durch eine gebogene Wand (22) und nach unten durch eine untere Stützwand (23) für die entsprechende Trommel begrenzt ist, während die Breite (L) der unteren Stützwand eine Abmessung hat, die kleiner ist als der Durchmesser (D), damit es gegen das Stiftlager keine Stützwand gibt und damit die Freigabe des gewählten Stifts möglich ist, nachdem die Trommel gedreht wurde, um den gewählten Stift gegenüber dem Ausgabedurchgang anzuordnen.

8. Vorrichtung zur Lagerung und Ausgabe (1) nach dem vorhergehenden Anspruch, **dadurch gekennzeichnet, dass** sich gegenüber jedem der Trommellager eine Aufnahmeschale (25) befindet, deren Boden (26) weiter unten liegt als die entsprechende untere Stützwand (23).

9. Vorrichtung zur Lagerung und Ausgabe (1) nach dem vorhergehenden Anspruch, **dadurch gekennzeichnet, dass** sich die Aufnahmeschale in einem Abstand (H) von der unteren Stützwand befindet, der größer ist als die Länge (L) der Stifte, damit der gewählte Stift, nachdem der Trommelkörper geschwenkt wurde, um diesen Stift gegenüber dem Ausgabedurchgang anzuordnen, durch einfache Schwerkraft fallen kann, um in der entsprechenden Schale zu landen.

10. Vorrichtung zur Lagerung und Ausgabe (1) nach einem der vorhergehenden Ansprüche, **dadurch gekennzeichnet, dass** die Vorrichtung eine abnehmbare mittlere Schale (27) aufweist, die auf den mittleren Vorsprung (28) des Halters (2) gesetzt wird und deren seitliche Abbüge (29) Aufnahmemulden (30) aufweisen, die dazu bestimmt sind, über die Aufnahmeschalen (25) des Haupthalters (2) gelegt zu werden, so dass, wenn die mittlere Schale (27) eingesetzt ist, die gewählten Stifte nicht in die Aufnahmeschalen (25) des Halters (2), sondern in die entsprechenden Aufnahmemulden (30) der mittleren Schale (27) fallen.

11. Vorrichtung zur Lagerung und Aufnahme (1) nach dem vorhergehenden Anspruch, **dadurch gekennzeichnet, dass** die mittlere Schale aus einem transparenten Material, wie beispielsweise aus Methacrylat oder einem anderen Material besteht, wodurch es dem Nutzer ermöglicht wird, die aus dem Haupthalter freigegebenen Teile zu sehen.

12. Vorrichtung zur Lagerung und Ausgabe (1) nach einem der vorhergehenden Ansprüche, **dadurch gekennzeichnet, dass** der Halter (2) mehrere abnehmbare Module (31) aufweist, die zur Aufbewahrung der Reibahlen (34) dienen.

13. Vorrichtung zur Lagerung und Ausgabe (1) nach einem der vorhergehenden Ansprüche, **dadurch gekennzeichnet, dass** der obere Teil des mittleren Vorsprungs des Halters (28) Messlehren und -kaliber (32a, 32b) aufweist, um die Länge (32a) und den Durchmesser (32b) der Stifte zu identifizieren.

14. Vorrichtung zur Lagerung und Ausgabe (1) nach einem der vorhergehenden Ansprüche, **dadurch gekennzeichnet, dass** es sich bei den Teilen, die in den Lagern (3) der Trommeln angeordnet werden, um Dentalstifte handelt (8).

## Claims

1. Device (1) for storing and dispensing parts intended for dentistry, consisting of at least one barrel (4), the body (5) of which comprises a plurality of housings open downwards, in its position of use, intended to receive said parts, said barrel body (5) being mounted pivotally on a bottom plug (6) fixed to a support (2) in a housing in the barrel, said plug comprising a dispensing passage (24) enabling the parts chosen by the user, after rotation of the barrel body, to fall by gravity into a receiving cup (25, 26), and the support (2) being in the form of a substantially circular part comprising an external peripheral rim (21), which comprises barrel housings (3).

2. Storage and dispensing device (1) according to claim 1, **characterised in that** said barrel housings (3) have a bottom bearing wall (23) comprising, by cooperation with the bottom plug (6), means for locking and blocking said bottom plug with respect to rotation.

3. Storage and dispensing device (1) according to claim 2, **characterised in that** the transverse wall (16) of the bottom plug (6) comprises a projection (17) for positive location and blocking with respect to rotation extending downwards and two locking lugs (18a, 18b), the positive-location projection (17) being intended to be engaged in a positive-location hole (19) produced in the bottom bearing wall (23) of the support (2), while the two locking lugs (18a, 18b) are intended to be engaged in a corresponding locking hole (20) produced in the bottom bearing wall (23) of the support (2).

4. Storage and dispensing device (1) according to claim 3, **characterised in that** the body of the barrel (5), which comprises a set of housings (9) for tenons emerging downwards, one of which is open laterally over part of the height in order to receive a breakable lug (10) secured to the bottom plug (6), while the breakable lug is intended to be broken by the user before placing the barrel in its housing, said breakable lug, when it is not broken, makes it possible firstly to prevent rotation of the barrel body on its bottom plug and secondly to fill the bottom opening of the tenon housing, while, when the breakable lug is broken, this makes it possible firstly to be able to pivot the barrel body on its bottom plug and secondly to create the dispensing passage (24) allowing release of the tenon, the housing of which is opposite said dispensing passage.

5. Storage and dispensing device (1) according to claim 4, **characterised in that** the barrel body (5) is snapped onto its bottom plug (6) and is mounted so as to be able to pivot with respect to this plug on a central projection (11) by cooperation of this central projection (11) with the central hole (12) in the barrel body, this cooperation forming the pivot axis (X-X') of the barrel body.

6. Storage and dispensing device (1) according to any one of the preceding claims, **characterised in that** the barrel body (5) and its bottom plug (7) are produced from plastics material.

7. Storage and dispensing device (1) according to claim 1, **characterised in that** said parts are dental tenons (8) and **in that** each of the housings is formed by a hollow profile open towards the inside of the support (2), said housing being delimited outwardly by a curved wall (22) and downwardly by a bottom bearing wall (23) for the corresponding barrel, while the width (L) of the bottom bearing wall has a dimension less than the diameter (D), so that there is no bearing wall in line with the tenon housing, and to allow release of the chosen tenon, after rotation of the barrel in order to place the chosen tenon opposite the dispensing passage.

8. Storage and dispensing device (1) according to the preceding claim, **characterised in that**, opposite each of the barrel housings, a reception cup (25) is situated, the bottom (26) of which is lower than the corresponding bottom bearing wall (23).

9. Storage and dispensing device (1) according to the preceding claim, **characterised in that** the reception cup is situated at a distance (H) from the bottom bearing wall that is greater than the length (L) of the tenons so that the chosen tenon, after pivoting of the barrel body in order to place this tenon opposite the dispensing passage, can fall by simple gravity in order to be placed in the corresponding cup.

10. Storage and dispensing device (1) according to any one of the preceding claims, **characterised in that** the device comprises a removable central cup (27) that fits on top of the central projection (28) of the support (2) and the lateral slopes (29) of which comprise reception bowls (30) intended to be superimposed on the reception cups (25) of the main support (2), and thus, when the central cup (27) is in place, the chosen tenons fall not into the reception cups (25) of the support (2) but into the corresponding reception bowls (30) of the central cup (27).

11. Storage and dispensing device (1) according to the preceding claim, **characterised in that** the central cup is made from transparent material such as methacrylate or the like, which enables the user to view the parts of the main support that have been released.

12. Storage arid dispensing device (1) according to any one of the preceding claims, **characterised in that** the support (2) comprises several removable modules (31) intended for storing reamers (34).

13. Storage and dispensing device (1) according to any one of the preceding claims, **characterised in that** the top part of the central projection of the support (28) comprises measuring gauges (32a, 32b) for identifying the tenons in terms of length (32a) and diameter (32b).

14. Storage and dispensing device (1) according to any one of the preceding claims, **characterised in that** the parts put in place in the housings (3) of the barrels are dental tenons (8).
